# EUROPÄISCHE PATENTANMELDUNG

(11) **EP 0 974 926 A2**
(43) Veröffentlichungstag der Anmeldung: **26.01.2000**
(21) Anmeldenummer: 99113975.9
(22) Anmeldetag: 17.07.1999
(51) Int. Cl.: G06K 11/18, B60K 37/00

(54) **Bedienvorrichtung**

(30) Priorität: 21.07.1998 DE 19832677
(71) Anmelder: Mannesmann VDO Aktiengesellschaft, 60388 Frankfurt am Main (DE)
(72) Erfinder: Klein, Thomas, 55262 Heidesheim (DE); Keller, Thomas, 65931 Frankfurt (DE)
(74) Vertreter: Rassler, Andrea, Dipl.-Phys.

(57) **Zusammenfassung**

Bei einer Bedienvorrichtung mit der Funktionsgruppen, Funktionen und/oder Funktionswerte durch das Drehen der Handhabe eines Drehschalters anwählbar und durch einen oder mehrere Eingabeschalter auswählbar sind, ist vorgesehen, daß zumindest ein Eingabeschalter (2) am oder neben dem Außenumfang der Handhabe des Drehschalters oder innerhalb der Handhabe (1) des Drehschalters angeordnet ist.

## Beschreibung

Die Erfindung eine Bedienvorrichtung, insbesondere für Kraftfahrzeuge, mit der Funktionsgruppen, Funktionen und Funktionswerten mittels der Handhabe eines Drehschalters anwählbar und durch einen oder mehrere Eingabeschalter auswählbar sind. Aus dem Stand der Technik ist es bekannt, einen Drehschalter zur Anwahl von Funktionsgruppen, Funktionen und Funktionswerten zu benutzen und die angewählte Funktionsgruppe, Funktion oder den angewählten Funktionswert durch einen räumlich entfernten Eingabeknopf auswählen. Nachteilig hierbei ist es, daß entweder zur Einstellung eine zweite Hand benötigt wird, wobei der Drehschalter von der Hand losgelassen werden muß und die Eingabetaste mit der Hand erfühlt oder durch ein durch die Augen gesteuertes Betätigen durchgeführt wird. Hierbei ist eine gewisse Aufmerksamkeit des Benutzers erforderlich, so daß insbesondere bei Bedienvorrichtungen in Kraftfahrzeugen oder Flugzeugen die Aufmerksamkeit zu stark abgelenkt wird. Deshalb sind im Stand der Technik weiterhin Bedienvorrichtungen bekannt, bei denen mittels eines Drehschalters eine Funktionsgruppe, Funktion und/oder ein Funktionswert anwählbar und durch axiale Betätigung des Drehschalters die angewählte Funktionsgruppe, Funktion oder der angewählte Funktionswert auswählbar ist.

Nachteilig bei dieser bekannten Bedienvorrichtung ist es, insbesondere in Kraftfahrzeugen, daß eine beim Bedienen gerade angewählte Funktionsgruppe, Funktion oder Funktionswert unbeabsichtigt dadurch ausgewählt wird, daß während des Drehens des Drehschalters durch einen unbeabsichtigten axialen Druck die Eingabefunktion durchgeführt wird. Dieser unbeabsichtigte Druck kann insbesondere während des Befahrens unebener Fahrbahnen oder durch sonstige Kräfte verursacht werden, die beim Beschleunigen oder Abbremsen des Kraftfahrzeuges auf die Hand des Bedieners des Drehschalters einwirken.

Aufgabe der Erfindung ist es daher, eine Bedienvorrichtung zur Anwahl und zum Auswählen von Funktionsgruppen, Funktionen und Funktionswerten anzugeben, bei der eine Auswahl der Funktionsgruppen, Funktionen und Funktionswerten ohne ein Suchen der Eingabevorrichtung erfolgen kann und bei der ein versehentliches Auswählen von Funktionsgruppen, Funktionen und Funktionswerten vermieden wird.

Diese Aufgabe wird dadurch gelöst, daß zumindest ein Eingabeschalter am oder neben dem Außenumfang der Handhabe des Drehschalters oder innerhalb der Handhabe des Drehschalters angeordnet sind. Dieser Eingabeschalter kann beispielsweise durch einen Taster oder durch eine kapazitive, induktive oder optische Eingabevorrichtung realisiert sein.

Durch die Anordnung des oder der Eingabeschalter ist der Eingabeschalter von einem oder mehreren Fingern oder Handbereichen mit der Hand betätigbar, die zur Drehung der Handhabe des Drehschalters benutzt wird, wobei die Finger, die die Handhabe des Drehschalters betätigen, weitestgehend an der Handhabe des Drehschalters verbleiben können. Eine versehentliche Eingabe eines gerade angewählten Wertes kann so ausgeschlossen werden. Weiterhin ist ein Umgreifen der die Handhabe bedienenden Hand nicht erforderlich, so daß gegenüber den bekannten Bedienvorrichtungen mit separaten Auswahl- und Ausgabeschaltern die Bedienvorrichtung einfacher und sicherer zu bedienen ist.

Wenn der Eingabeschalter die Handhabe zumindest teilweise umrahmt, ist ein einfacher Aufbau der Bedienvorrichtung gegeben und die Handhabe des Drehschalters kann beispielsweise vom Daumen und Zeigefinger einer Hand gedreht werden und der Eingabeschalter vom Mittelfinger betätigt werden.

Sofern der Eingabeschalter die Handhabe des Drehschalters vollständig umrahmt kann die Bedienvorrichtung von jeder Position aus und von jeder Hand betätigt werden. Ist die Bedienvorrichtung beispielsweise auf einer Mittelkonsole oder in der Mitte des Armaturenbrettes eines Kraftfahrzeuges angeordnet, so können sowohl der Fahrer wie der Beifahrer die Bedienvorrichtung mit jeweils nur einer beliebigen Hand betätigen.

Wenn der Eingabeschalter als Tastfeld ausgestattet ist, das beispielsweise entweder eine normalen Taster betätigt oder durch induktive, kapazitive oder optische Wirkungen eine Eingabefunktion auslöst, kann die Geometrie des Tastfeldes an das Gerätedesign angepaßt und die Bedienung weiter vereinfacht werden. Insbesondere durch eine Gestaltung des Tastfeldes derart, daß es durch den Handballen der die Handhabe des Drehschalters betätigenden Hand betätigt werden kann, ist eine besonders einfache und sichere Handhabung der Bedienvorrichtung auch während der Fahrt in einem Kraftfahrzeug möglich. Bei einem Tastfeld mit einem oder mehreren Tastern zum Auslösen der Eingabefunktion ist es beispielsweise für den Bediener besonders angenehm, wenn in dem Tastfeld ein oder zwei muldenfarbige Ausgestaltungen für die jeweiligen Handballen vorgesehen sind.

Wenn mindestens ein Taster am äußeren Umfang der Handhabe des Drehschalters angeordnet ist, der durch radialen Druck betätigbar ist, kann die Eingabefunktion gleichzeitig durch die Finger der Hand die Handhabe betätigenden Hand ausgelöst werden, ohne daß zusätzliche Extremitäten des Benutzers benötigt werden.

Dadurch, daß die zum Betätigen des Tasters erforderliche Kraft verstellbar ist, kann die Bedienvorrichtung an unterschiedliche Bediener und deren Bediengewohnheiten angepaßt werden.

Dadurch, daß der Eingabeschalter innerhalb der Handhabe des Drehschalters angeordnet ist, ist eine besonders kompakte Gestaltung bei einer gewünschten Größe der Handhabe realisierbar.

Durch die Ausgabe von haptischen Rückmeldungen der Handhabe des Drehschalters an den Benutzer wird die Bedienung komfortabler und sicherer.

Sofern diese haptischen Rückmeldungen in Abhängigkeit der einzustellenden Funktionsgruppen, Funktionen und Funktionswerte veränderbar sind, wird die Bedienung der Bedienvorrichtung weiter vereinfacht, da der Bediener durch diese Rückmeldung erfährt, in welchem Bedienmenü er sich im Moment befindet, ohne auf sonstige optische oder akustische Rückmeldungen achten zu müssen.

Die Erfindung wird nachfolgend der anhand der Figuren näher erläutert.

### Es zeigen:

- Figur 1:: Eine erste Ausgestaltung der Erfindung bei der der Eingabeschalter innerhalb der Handhabe des Drehschalters angeordnet ist
- Figur 2:: eine zweite Ausgestaltung der Erfindung, bei der der Eingabeschalter die Handhabe des Drehschalters vollständig umrahmt
- Figur 3:: eine dritte Ausgestaltung der Erfindung, bei der der Eingabeschalter als ein Tastfeld ausgestaltet ist, das die Handhabe des Drehschalters vollständig umrahmt
- Figur 4:: eine vierte Ausgestaltung der Erfindung, bei der das Tastfeld eine Auflage für den linken und rechten Handballen der die Handhabe des Drehschalters bedienenden Hand aufweist
- Figur 5:: eine Handhabe eines Drehschalters, bei dem mehrere Eingabeschalter am Außenempfang der Handhabe angeordnet sind.
- Figur 6:: eine Bedienvorrichtung und zusätzlich eine Anzeige und einen Lautsprecher
- Figur 7:: die Anzeige aus Figur 6 mit einer anderen angewählten Funktionsgruppe

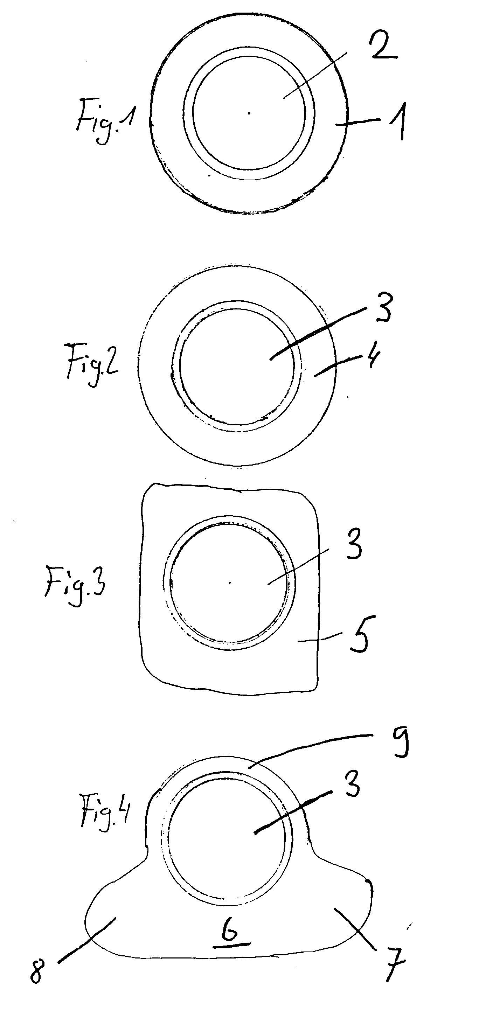

In Figur 1 ist innerhalb der Handhabe 1 des Drehschalters ein Eingabeschalter 2 angeordnet. Dieser Eingabeschalter 2 kann wie dargestellt durch die Handhabe 2 des Eingabeschalters realisiert sein, der als Taste ausgestaltet sein kann. Es ist auch möglich, einen Eingabeschalter durch induktive, kapazitive und/oder optische Mittel zu realisieren, die innerhalb der Handhabe 1 des Drehschalters angeordnet sind.

In Figur 2 ist die Handhabe 3 des Drehschalters von einem Eingabeschalter 4 vollständig umrahmt, wobei dieser wie auch der Eingabeschalter 2 in Figur 1 rein mechanisch durch einen oder mehrere Taster oder elektronisch durch induktive, kapazitive und/oder optische Mittel realisiert sein kann.

Der Eingabeschalter in Figur 3 ist als Tastfeld 5 realisiert, das die Handhabe 3 des Drehschalters vollständig umrahmt. Das Tastfeld 5 kann beispielsweise mechanisch als Schaltmatte realisiert sein oder wie die zuvor beschriebenen Eingabeschalter 2, 4.

In Figur 4 weist der Eingabeschalter 6 zwei Bereiche 7, 8 auf, die von dem Handballen der die Handhabe 3 des Drehschalters bedienenden Hand betätigt werden kann. So kann beispielsweise die Handhabe 3 des Drehschalters von dem Daumen und dem Zeigefinger der rechten Hand bedient werden und die Eingabefunktion durch ein Absenken des Handballens auf den Bereich 7 ausgelöst werden. Es ist bei dem dargestellten Beispiel in Figur 4 auch möglich, beim Einstellen der Handhabe 3 des Drehschalters mit dem Daumen und beispielsweise dem Zeigefinger einer Hand die Eingabefunktion durch eine Betätigung des Tastenfeldes 6 mit einem weiteren Finger im radialen Bereich 9 des Tastfeldes auszuführen. Sofern das Tastfeld 6 mit mechanischen Mitteln die Schaltfunktionen ausführt, ist die Eingabefunktion für den Bediener besonders leicht und angenehm auszuführen, wenn die Bereiche 7, 8 muldenförmig zur Aufnahme des jeweiligen Handballens ausgestaltet sind. So ist es beispielsweise besonders angenehm für den Bediener, wenn der Bereich 7 für die Aufnahme des rechten Handballens und der Bereich 8 für die Aufnahme des linken Handballens ausgestaltet ist.

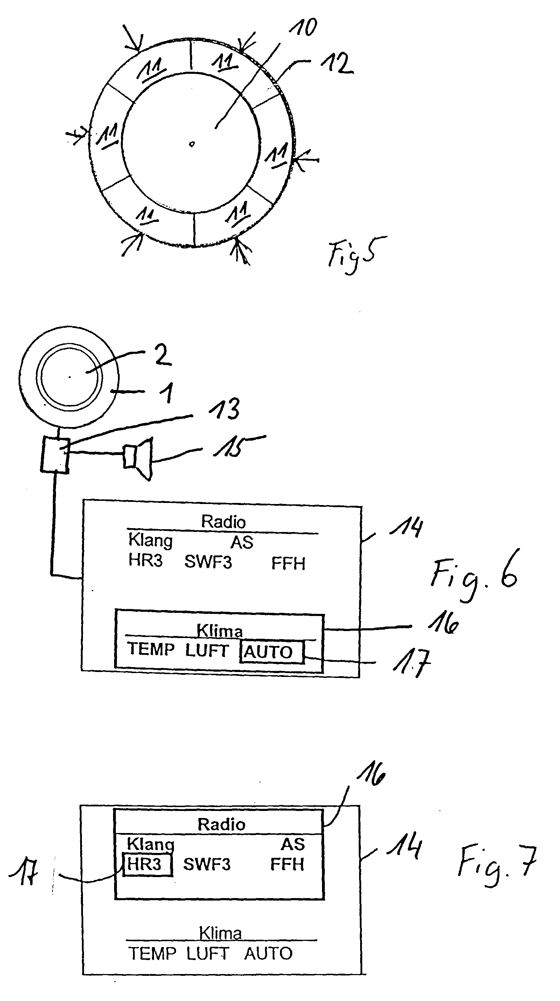

Figur 5 zeigt eine Handhabe 10 eines Drehschalters, bei dem mehrere Eingabeschalter in Form von Tasten 11 am Außenumfang 12 der Handhabe 10 angeordnet sind, die durch radialen Druck betätigbar sind, wie durch die Pfeile angedeutet. Hierdurch kann die Eingabefunktion durch die Finger ausgelöst werden, die die Handhabe 10 drehen, ohne daß die Finger ihre Lage mit Ausnahme des Betätigungsweges für die Taste 11 verändern müßten. Vorteilhafterweise ist nur die Betätigung eines Tasters 11 zur Durchführung der Eingabefunktion erforderlich. Dann reicht es aus, wenn der Bediener nur mit einem Finger den Druck auf die Handhabe erhöht. Wenn die zum Betätigen des oder der Tasten 11 erforderliche Kraft veränderbar ist, kann die Bedienvorrichtung an individuellen Gewohnheiten der Bediener angepaßt werden.

Figur 6 zeigt zusätzlich zu der Handhabe 1 und dem Eingabeschalter 2 den Drehschalter 13 einschließlich der Auswerte- und Ansteuerelektronik, eine Anzeige 14 und einen Lautsprecher 15. Die Anzeige 14 zeigt zwei Funktionsgruppen, nämlich die Funktionsgruppe Radio und die Funktionsgruppe Klima. In der Funktionsgruppe Radio können die einzelnen Funktionen des Autoradios angewählt und ausgewählt werden, die dann einstellbar sind. In der Funktionsgruppe Klima können einzelne Funktionen der Kraftfahrzeugklimaanlage ausgewählt und dann eingestellt werden. In Figur 6 ist die Funktionsgruppe Klima angewählt, was durch den auf der Anzeige 14 dargestellten Rahmen 16 gezeigt wird. Anstelle durch einen Rahmen kann die angewählte Funktionsgruppe, Funktion oder der angewählte Funktionswert z.B. auch durch eine Farbänderung der angewählten Funktionsgruppe, Funktionen oder einen entsprechenden Negativmodus dargestellt werden.

Durch das Drehen der Handhabe 1 des Drehschalters 13 springt ein Rahmen 17 zwischen den anwählbaren Funktionen, in Figur 6 Temperatur, Luft und Auto hin und her, je nach Drehrichtung der Handhabe. Durch ein Betätigen des Eingabeschalters 2 ist die angewählte Funktion, in Figur 6 die Funktion Auto auswählbar.

Über den Lautsprecher 15 sind die an- und ausgewählten Funktionsgruppen, Funktionen und Funktionswerte auch akustisch darstellbar.

In Figur 7 ist auf der Anzeige 14 das Radiomenü ausgewählt, was wiederum durch den Rahmen 16 auch optisch dargestellt wird. Innerhalb des Radiomenüs ist der Sender HR 3 angewählt, was durch den Rahmen 17 dargestellt wird. Dieser Sender ist durch ein Betätigen des Eingabeschalters auswählbar.

## Patentansprüche

1. Bedienvorrichtung, mit der Funktionsgruppen, Funktionen und/oder Funktionswerte durch das Drehen der Handhabe eines Drehschalters anwählbar und durch einen oder mehrere Eingabeschalter auswählbar sind, **dadurch gekennzeichnet, daß** zumindest ein Eingabeschalter (2, 4, 5, 6, 11) am oder neben dem Außenumfang der Handhabe (3, 10) des Drehschalters oder innerhalb der Handhabe (1) des Drehschalters (13) angeordnet ist.

2. Bedienvorrichtung nach Anspruch 1, **dadurch gekennzeichnet, daß** der Eingabeschalter (4, 5, 6) die Handhabe (3) des Drehschalters (13) zumindest teilweise umrahmt.

3. Bedienvorrichtung nach Anspruch 2, **dadurch gekennzeichnet, daß** der Eingabeschalter (4, 5, 6) die Handhabe (3) des Drehschalters (13) vollständig umrahmt.

4. Bedienvorrichtung nach einem der vorstehenden Ansprüche, **dadurch gekennzeichnet, daß** der Eingabeschalter (4, 5, 6) als Tastfeld (5, 6) ausgestaltet ist.

5. Bedienvorrichtung nach Anspruch 4, **dadurch gekennzeichnet, daß** das Tastfeld (6) derart ausgeformt ist, daß der Eingabeschalter durch den Handballen der linken und/oder rechten Hand betätigbar ist, während einige Finger der entsprechenden Hand die Handhabe (3) des Drehschalters (13) halten.

6. Bedienvorrichtung nach Anspruch 1, **dadurch gekennzeichnet, daß** mindestens ein Taster (11) am äußeren Umfang (12) der Handhabe (10) des Drehschalters (13) angeordnet ist, wobei der Taster (11) durch radialen Druck betätigbar ist.

7. Bedienvorrichtung nach Anspruch 6, **dadurch gekennzeichnet, daß** die zum Betätigen der Taster (11) erforderliche Kraft verstellbar ist.

8. Bedienvorrichtung nach einem der vorstehenden Ansprüche, **dadurch gekennzeichnet, daß** die Handhabe (1, 3, 10) des Drehschalters haptische Rückmeldungen ausgibt.

9. Bedienvorrichtung nach Anspruch 8, **dadurch gekennzeichnet, daß** die haptischen Rückmeldungen in Abhängigkeit der einzustellenden Funktionsgruppen, Funktionen und Funktionswerte veränderbar sind.

10. Bedienvorrichtung nach einem der vorstehenden Ansprüche, **dadurch gekennzeichnet, daß** die einzustellenden Funktionsgruppen, Funktionen oder Werte dem Bediener optisch und/oder akustisch übermittelbar sind.
